# EUROPEAN PATENT APPLICATION

(11) **EP 0 992 921 A2**
(43) Date of publication of application: **12.04.2000**
(21) Application number: 99307465.7
(22) Date of filing: 21.09.1999
(51) Int. Cl.: G06F 17/30

(54) **Computer access dependent on the location of the accessing terminal**

(30) Priority: 29.09.1998 US 162494
(71) Applicant: LUCENT TECHNOLOGIES INC., Murray Hill, New Jersey 07974-0636 (US)
(72) Inventor: Griffith, Gary L., Arvada, Colorado 80005 (US)
(74) Representative: Watts, Christopher Malcolm Kelway, Dr.

(57) **Abstract**

Determining the location of a wireless terminal provides access to data stored in a database of a central computer associated with that location to the wireless terminal. The user of the wireless terminal is not required to perform any activity to gain access to data associated with the location. The degree of access to the data associated with a location is dependent upon the authorization information supplied by the wireless terminal to the central computer after the location of the wireless terminal has been determined. In addition, the wireless terminal may be a computer capable of wireless communication, a wireless PDA, or a wireless telephone set having display and data entry capabilities. In a first embodiment, a wireless terminal communicates with the central computer via a wireless switching system. The central computer determines the location of the wireless terminal upon establishment of a communication path between the wireless terminal and the central computer. In a second embodiment of the invention, the wireless terminal communicates via a wireless transceiver with the central computer. There is one wireless transceiver for each location. The transceivers are connected to the central computer by a local area network (LAN).

## Description

### Technical Field

The present invention relates to wireless switching systems and, in particular, to providing remote computer access to an accessing terminal based on the location of that terminal.

### Background of the Invention

In the modem commercial environment, there are many situations where it is desirable that computer access to information be based on the location of the terminal requesting that information. For example, when a doctor enters the room of a patient, the doctor wishes to access all records of the patient which are stored in a computer database. Even if the doctor is equipped with a laptop computer or PDA device, the doctor must enter the patient's identification in order to obtain this record. The need to enter the patient's identification is true even if the laptop computer or PDA device is communicating with the database computer via a wireless link. A nurse entering the patient's room also faces the same problem. Whereas, in normal situations, the time required to enter the patient's identification is simply a waste of a valuable resource and an inconvenience. It is possible to function in this manner. However, if an emergency occurs that is life threatening for the patient, there is not time for a doctor or a nurse to be operating a keyboard. Other situations arise in the commercial or military environments where the access to information is time critical.

### Summary of the Invention

The aforementioned problems are solved and a technical advance is achieved in the art by an apparatus and method that determines the location of a wireless terminal and provides access to data stored in a database of a central computer associated with that location to the wireless terminal. The user of the wireless terminal is not required to perform any activity to gain access to data associated with the location. Advantageously, the degree of access to the data associated with a location is dependent upon the authorization information supplied by the wireless terminal to the central computer after the location of the wireless terminal has been determined. In addition, the wireless terminal may be a computer capable of wireless communication, a wireless PDA, or a wireless telephone set having display and data entry capabilities.

In a first embodiment, a wireless terminal communicates with the central computer via a wireless switching system. The central computer determines the location of the wireless terminal upon establishment of a communication path between the wireless terminal and the central computer. In a second embodiment of the invention, the wireless terminal communicates via a wireless transceiver with the central computer. There is one wireless transceiver for each location. The transceivers are connected to the central computer advantageously by a local area network (LAN).

Other and further aspects of the present invention will become apparent during the course of the following description by reference to the accompanying drawing.

### Brief Description of the Drawing

FIG. 1 illustrates, in block diagram form, a system for implementing the first embodiment of the invention;
FIG. 2 illustrates, in block diagram form, a system for implementing the second embodiment of the invention;
FIGS. 3 and 4 illustrate tables and a database utilized by a central computer;
FIGS. 5 and 6 illustrate, in flow chart form, steps performed by a central computer in a first implementation of the invention;
FIG. 7 illustrates, in block diagram form, a fixed unit;
FIG. 8 illustrates, in block diagram form, a wireless telephone;
FIG. 9 illustrates, in flow chart form, steps performed by a wireless terminal;
FIG. 10 illustrates, in block diagram form, steps performed by a fixed unit;
FIG. 11 illustrates, in flow chart form, steps performed by a central computer in a second implementation of the invention;
FIG. 12 illustrates, in block diagram form, a transceiver;
FIG. 13 illustrates, in block diagram form, a laptop computer configured as a wireless terminal;
FIG. 14 illustrates a table for utilization by a central computer; and
FIG. 15 illustrates a table and database for utilization by a central computer.

### Detailed Description

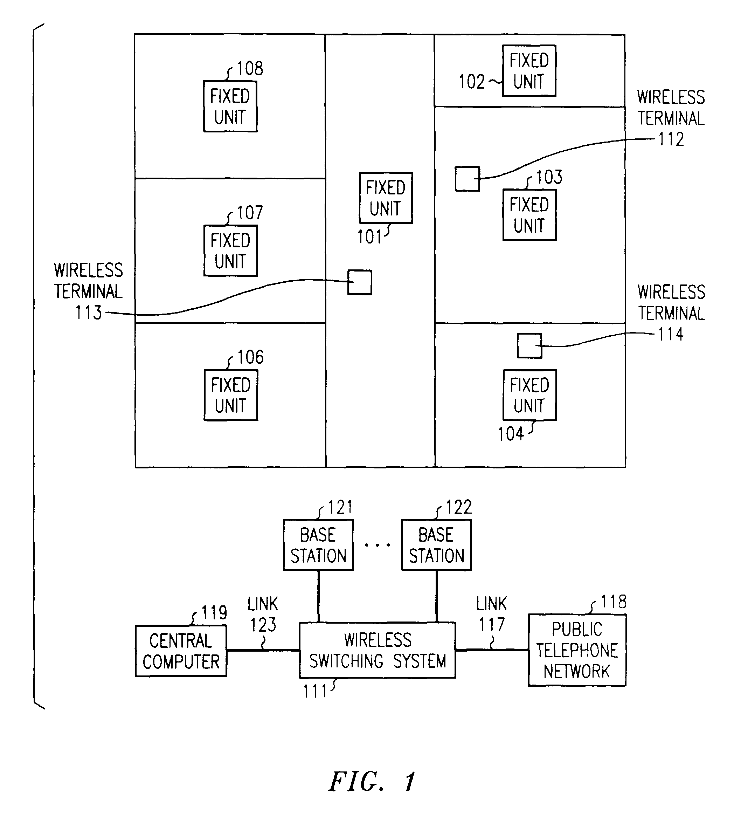

FIG. 1 illustrates, in block diagram form, a first embodiment of the invention. Wireless terminals 112-114 are interconnected to central computer 119 via base stations 121-122 and wireless switching system 111. In FIG. 1, when a wireless terminal enters a new location, it receives the identification of the fixed unit providing coverage for that location. The wireless terminal is responsive to the identification information from the fixed unit received via a transmission media other than that used by wireless switching system 111 to establish a data communication path to central computer 119 via a base station and wireless switching system 111. The wireless terminal then transmits to central computer 119 the identification information of the fixed unit. In response; central computer 119 determines the data that is assigned to that location. Central computer 119 then obtains the identification information of the wireless terminal. Central computer 119 determines what portion of the data assigned to the location can be accessed by the wireless terminal based on the identity of the wireless terminal. This portion of the data is referred to as authorized data. Central computer 119 is then responsive to requests from the wireless terminal to give the wireless terminal access to the authorized data. In addition, the wireless terminal can update portions of authorized data by the transmission of messages to central computer 119. If the system illustrated in FIG. 1 is serving a hospital, a doctor walking into a patient's room would have full access to the patient's records stored in central computer 119. However, a nurse would be given access only to a portion of the patient's records stored on central computer 119.

The wireless terminals may be laptop computers with a wireless interface designed to function with wireless switching system 111, PDAs similarly equipped, or wireless telephone sets. In addition, the transfer of data from central computer 119 to a wireless terminal may be in the form of text, video, or audio formats. For example, an individual delivering supplies or food to a patient in a hospital may only need to know the name of the patient. In such a situation, a wireless telephone would be very adequate for receiving audio information defining the name of the patient.

One skilled in the art could readily see that other methods could be utilized to determine the location of a wireless terminal. For example, the wireless terminals could transmit identification information defining the wireless terminal to a fixed unit which then could relay this to central computer 119 via wired or wireless media to central computer 119. In addition, global positioning satellite (GPS) devices or base stations could be used to determine a position of a wireless terminal.

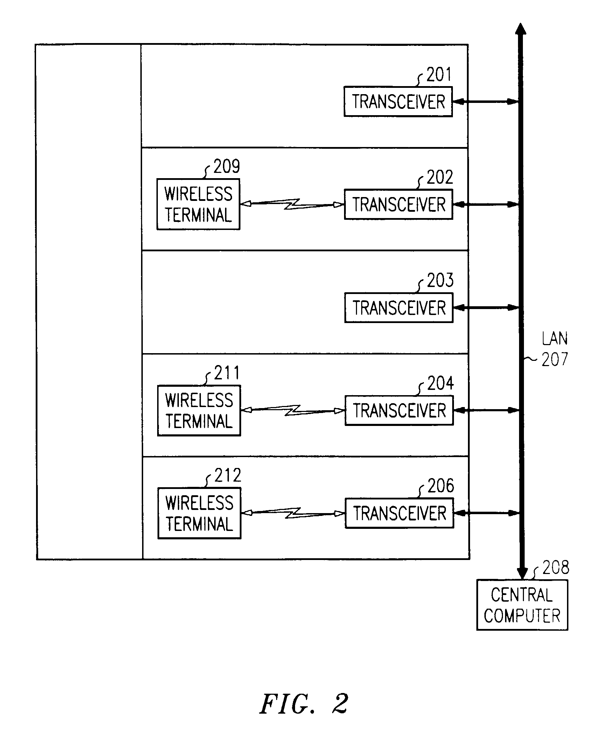

FIG. 2 illustrates, in block diagram form, a second embodiment of the invention. Wireless transceivers 201-206 each provide coverage for an individual location. When wireless terminal 209 enters the area that is covered by transceiver 202, a wireless communication link is established between wireless terminal 209 and wireless transceiver 202. Upon establishment of this link, transceiver 202 communicates via LAN 207 the identity of wireless terminal 209 and the identification information of transceiver 202. Central computer 208 then requests the identification information from wireless terminal 209. Based on the identification information from wireless terminal 209 and the location as defined by the identification of transceiver 202, central computer 208 authorizes access to portions of the data assigned to the location covered by transceiver 202. Wireless terminal 209 then is free to read and write the authorized data.

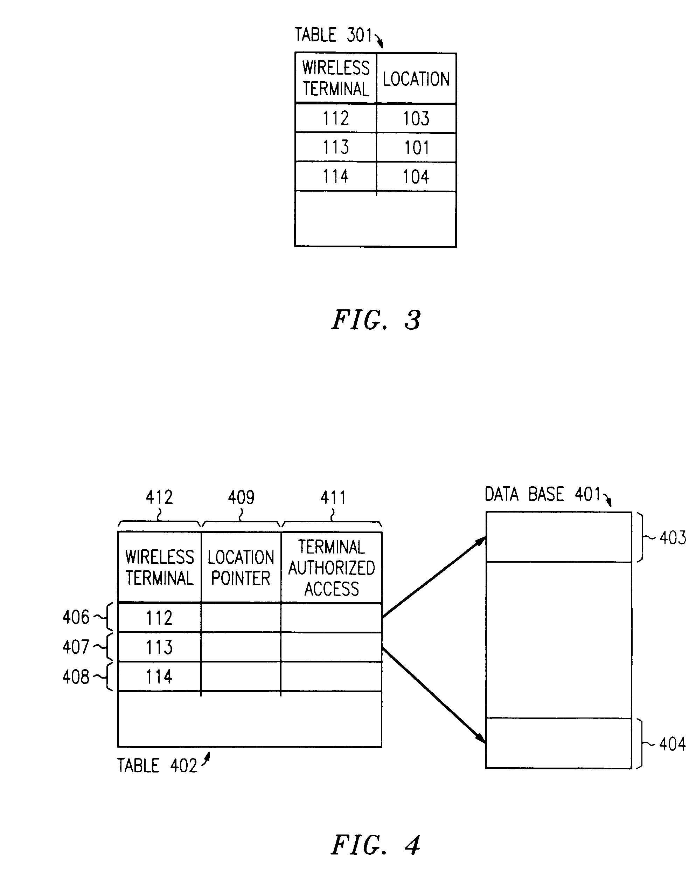

Central computer 119 utilizes Table 301 of FIG. 3 to maintain at which location a wireless terminal is. When a wireless terminal changes location, central computer 119 determines this by detecting that the location in FIG. 3 is no longer the real location of the wireless terminal.

FIG. 4 illustrates database 401 in which data assigned to each location is maintained and Table 402. Table 402 comprises pointers which are constructed based on location pointers into database 401 and the terminals' authorization codes. The terminal authorization codes are determined by central computer 119 based on the location information and the identification information of the wireless terminal.

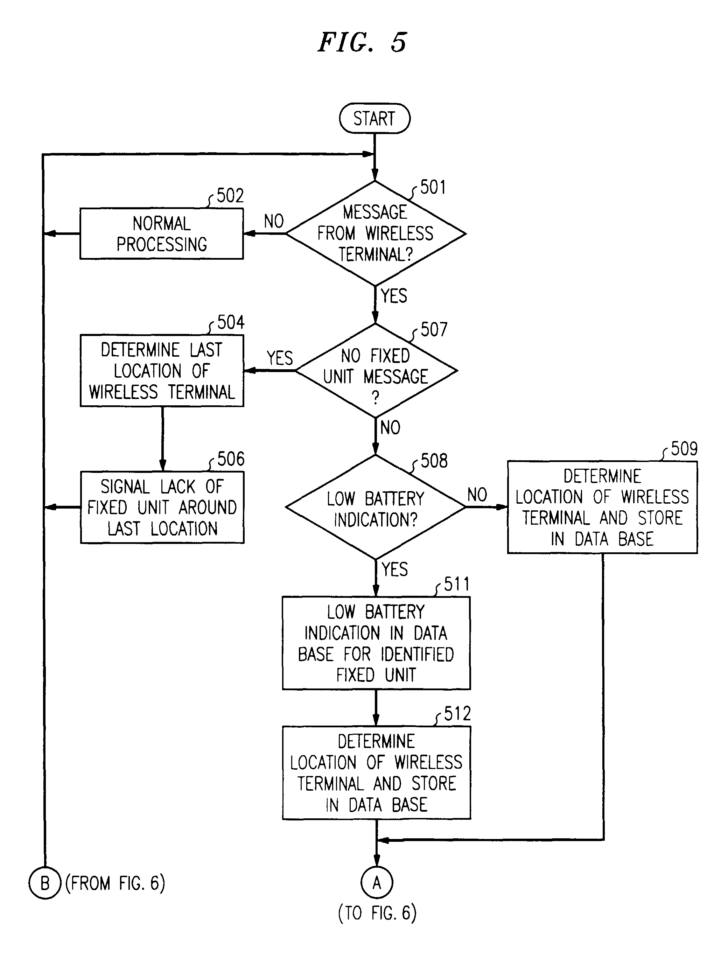

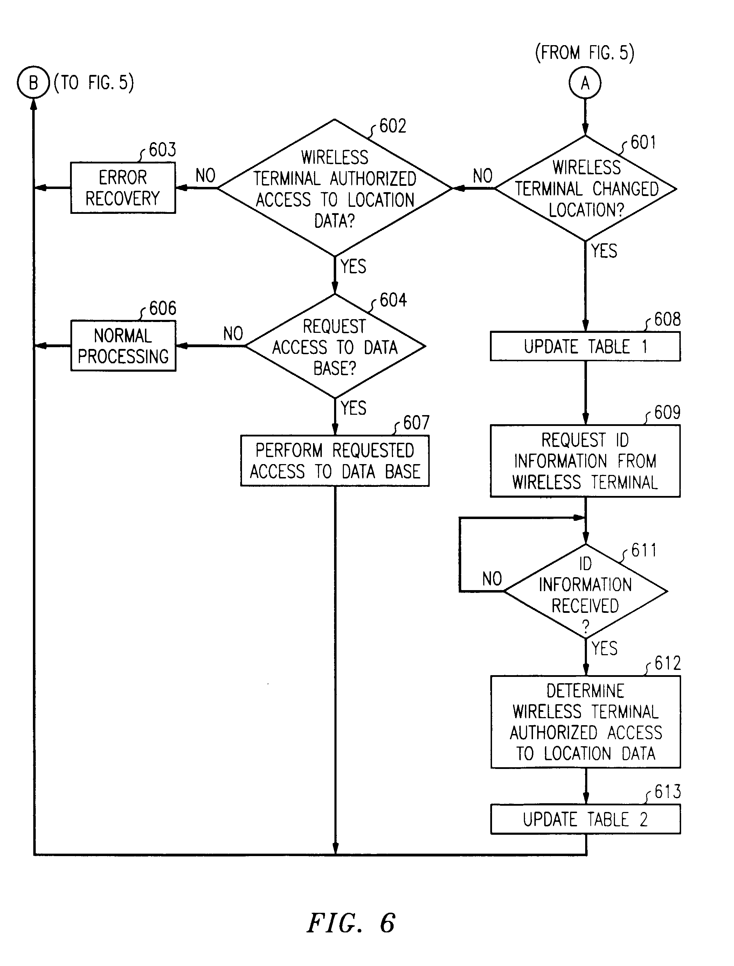

FIGS. 5 and 6 illustrate, in flow chart form, the steps performed by central computer 119 in implementing the first embodiment of the invention. Decision block 501 determines if there is a message from a wireless handset. If the answer is no, control is transferred to block 502 which performs normal processing before returning control back to decision block 501. If the answer in decision block 501 is yes, decision block 507 determines if a "no fixed unit" message is being received from a wireless telephone. Such a message indicates that a wireless telephone is not receiving the transmission signal from any fixed unit. If the answer is yes in decision block 507, control is transferred to block 504 which determines the last known location. Central computer 119 maintains a list of last known locations for each of the wireless terminals. Block 506 then signals that the wireless telephone cannot receive a fixed unit around the last location listed for the wireless telephone. This signaling may be in the form of a message displayed to an operator of central computer 119 or merely a message being included in a maintenance log of central computer 119. After execution of block 506, control is transferred back to decision block 501.

Returning to decision block 507, if the answer is no, decision block 508 determines if a low battery indication was included in the message identifying the fixed unit from the wireless telephone. If the answer is no in decision block 508, block 509 determines the location based on the identification code of the fixed unit of the wireless telephone before transferring control to decision block 601 of FIG. 6. If the answer in decision block 508 is yes, the low battery indication for the identified fixed unit is placed in the database, and a maintenance message indicating low battery is generated before transferring control to block 512. Block 512 performs the same operations as block 509 before transferring control to decision block 601 of FIG. 6.

Control is transferred to decision block 601 of FIG. 6 from either block 509 or block 512. Decision block 601 determines if the wireless terminal has changed its location. This is performed by utilizing the determined location in comparison with the location given for the terminal in Table 301 of FIG. 3. If the wireless terminal has changed locations, block 608 updates Table 301 (also referred to as Table 1 in FIG. 6) to reflect this new location, and block 609 requests the identification information from the wireless terminal by a message transmitted via wireless switching system 111. Decision block 611 determines when the identification information is received from the wireless terminal. When the identification information is received, control is transferred to block 612 which determines the authorized access to the location's data that is to be given to the wireless terminal. Block 613 stores this authorized access information into Table 402 of FIG. 4 (also referred to as Table 2 in FIG. 6) before returning control back to decision block 501 of FIG. 5.

Returning to decision block 601, if the wireless terminal has not changed location, control is transferred to decision block 602 which determines if the wireless terminal is authorized to access information in database 401 of FIG. 4 assigned to the particular location. Decision block 602 makes this determination by determining if there is a entry for the wireless terminal in column 412 of Table 402 of FIG. 4. If the answer is no in decision block 602, control is transferred to error recovery in block 603. If the answer is yes, control is transferred to decision block 604 which determines if the wireless terminal is requesting access to database 401. If the answer is no, control is transferred to block 606. The latter block performs normal processing before returning control back to decision block 501 of FIG. 5. If the answer is yes in decision block 604, block 607 performs the requested access to database 401 utilizing the pointer that comprises an entry from column 409 and an entry from column 411 of Table 402 of FIG. 4 to access the appropriate portion of database 401. After execution of block 607, control is transferred back to decision block 501 of FIG. 5.

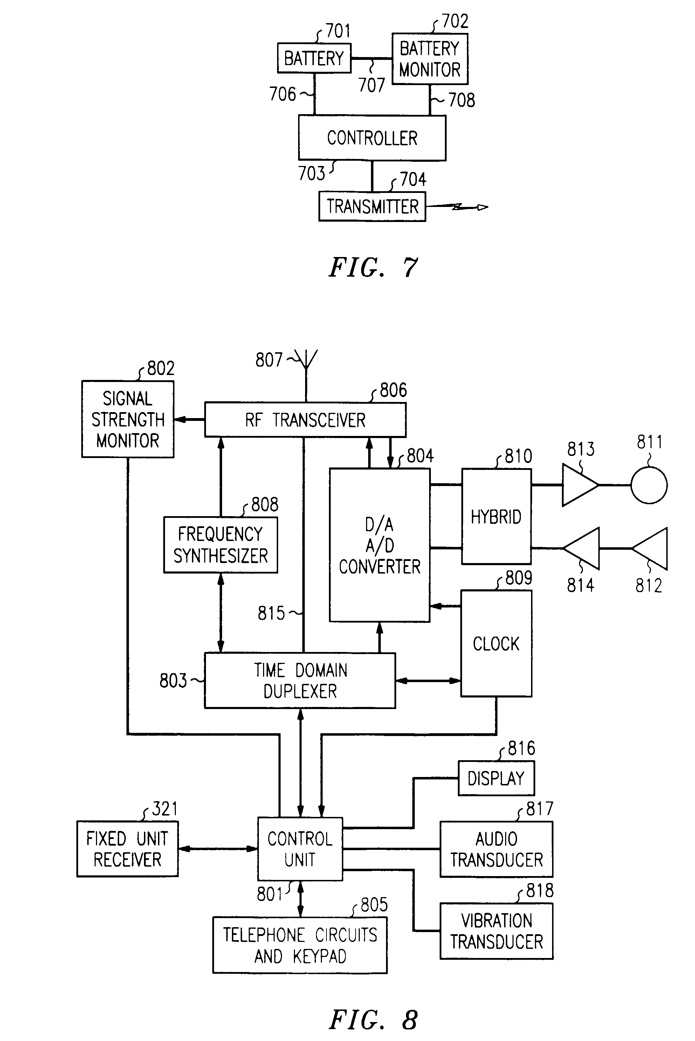

FIG. 7 illustrates in block diagram form a fixed unit. The fixed unit of FIG. 7 is powered by battery 701. However, one skilled in the art could readily see that normal building AC power could also be utilized to power the fixed unit. Controller 703 periodically transmits the identification code for the fixed unit via transmitter 704. Advantageously, transmitter 704 can be transmitting utilizing infrared transmission or ultrasonic transmission. Transmitters for transmitting either infrared or ultrasonic are well known in the art. If controller 703 detects that battery 701 is at a low power level via conductor 707, battery monitor 702, and conductor 708, controller 703 sets alarm indicator 705 and transmits the low power indication along with the identification code via transmitter 704.

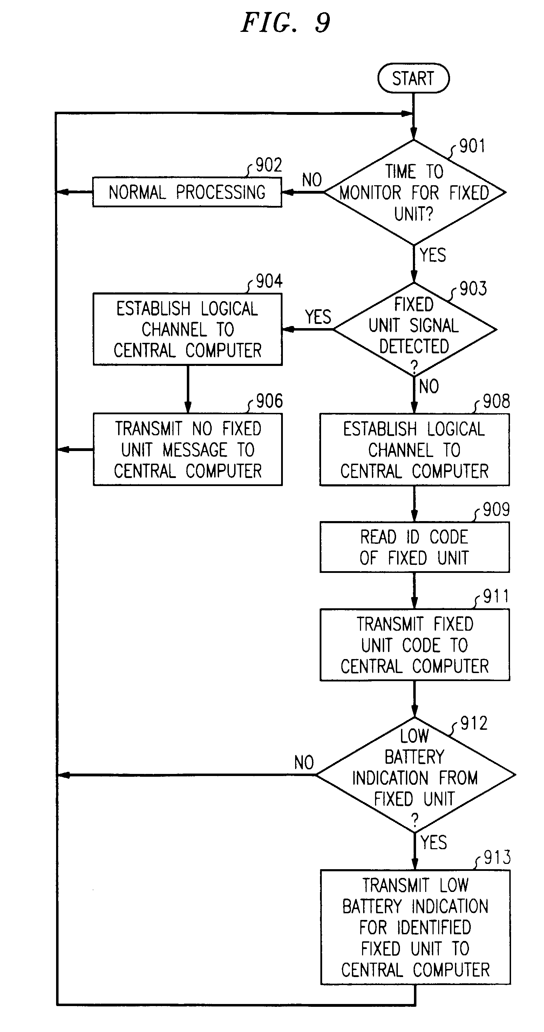

Wireless handset 112 is illustrated in greater detail in FIG. 8. Wireless handset 112 implements a wireless protocol that allows wireless handset 112 to maintain a wireless signal link with wireless telecommunication system controller 111 via base stations 121-122. One air interface that can be used is the Japanese PHS protocol as set forth in "User-Network Interface and Inter-Network Interface Standards for PHS", the Telecommunication Technology Committee, 1995, and "Personal Handy Phone System RCR Standard", Version 1, RCR STD-28, December 20, 1993. The message set of the PHS protocol is similar to the ISDN message set. Overall control of the wireless handset is provided by control unit 801. Units 802, 803, 806, 807, 808, and 809 provide the RF communication capabilities for the wireless handset. Elements 804, 810, and 811-814 provide the audio information received and transmitted to the user; whereas, elements 816-818 and 805 provide the basic user interface. The PHS protocol allows control unit 801 to establish a logical data channel with system controller 111. Control unit 801 utilizes this logical data channel to transmit identification information for fixed units to system controller 111 which in tum transfers this information to central computer 119 of FIG. 1 using well known methods. Fixed unit receiver 321 receives the identification code of a fixed unit and transfers this identification code to control unit 801 for transmission to central computer 119. Fixed unit receiver 321 is of a design well known in the art for either infrared or ultrasonic transmission media. One skilled in the art could readily see that fixed unit receiver 321 could provide to control unit 801 the signal strength of the received signal. Further, control unit 801 could also tune fixed unit receiver 321 to receive different frequencies or other variations of the transmission media using well known techniques in the art.

FIG. 9 illustrates the steps performed by a wireless terminal such as wireless handset 113. Decision block 901 determines if the time has elapsed to monitor for a fixed unit. Advantageously, every second the wireless handset monitors to determine if the transmission signal of a fixed unit is being received. If the answer in decision block 901 is no, normal processing is performed by block 902 before control is returned back to decision block 901.

If the answer in decision block 901 is yes, control is transferred to decision block 903 which determines if a transmission signal is being detected. If the answer in decision block 903 is no, control is transferred to block 904 which establishes a logical channel to central computer 119 via a base station and system controller 111. After the establishment of the logical channel, the wireless handset transmits a "no fixed unit" message to the central computer before transferring control back to decision block 901. Returning to decision block 903, if the answer is yes, control is transferred to block 908 which establishes a logical channel to central computer 119. Block 909 determines the identification code of the fixed unit whose transmission signal is being received, and block 911 transmits the received identification code to central computer 119 before transferring control to decision block 912. Decision block 912 determines if a low battery indication was included in the transmission signal from the fixed unit. If the answer is no, control is transferred back to decision block 901. If the answer in decision block 912 is yes, block 913 transmits a low battery indication message to central computer 119 for the identified fixed unit.

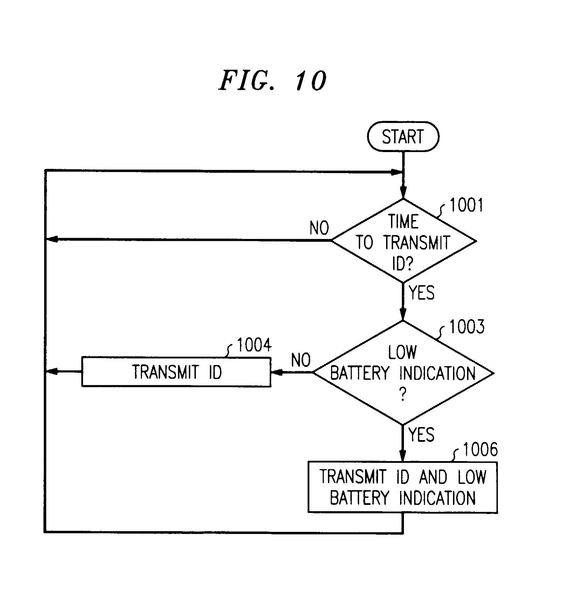

FIG. 10 illustrates the steps performed by a fixed unit. Decision block 1001 determines if it is time to transmit the identification code of the fixed unit. Advantageously, the identification code is transmitted every tenth of a second. If the answer is no, control is transferred back to decision block 1001. If the answer is yes, decision block 1003 determines if battery monitor 702 of FIG. 7 is indicating a low battery. If the answer is no, block 1004 simply transmits the identification code of the fixed unit before transferring control back to decision block 1001. If the answer in decision block 1003 is yes, block 1006 transmits a message that includes the identification code and a low battery indication before transferring control back to decision block 1001.

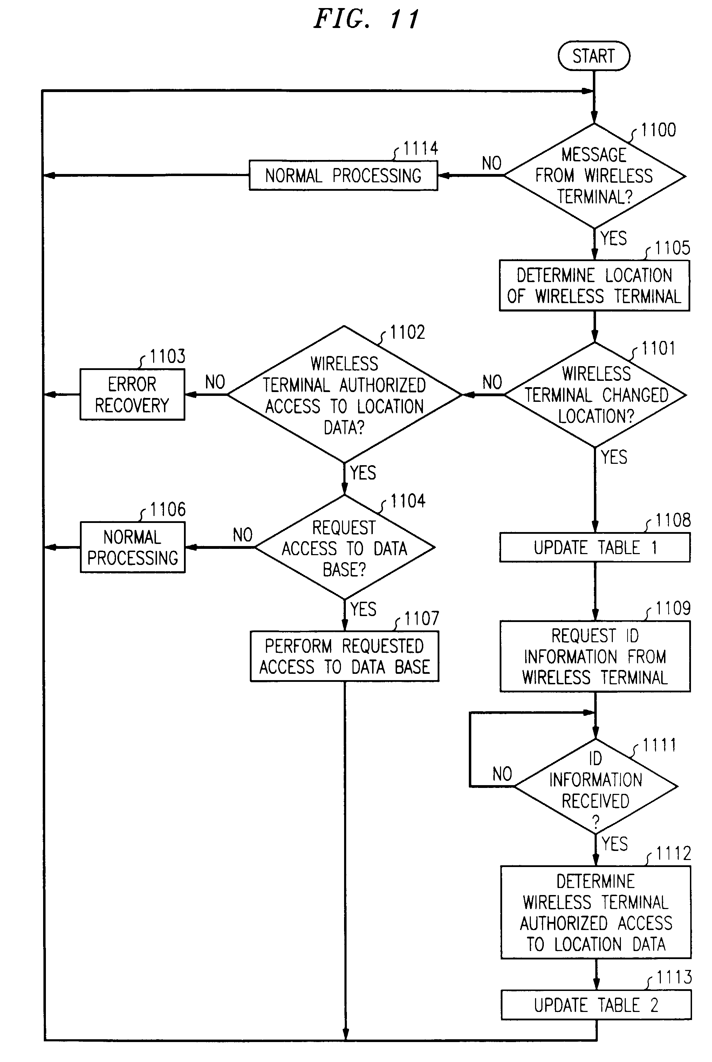

FIG. 11 illustrates, in flow chart form, the steps performed by central computer 208 in implementing the second embodiment of the invention. Central computer 208 maintains an intemal table which specifies the locations of transceivers 201-206. When a message is received from a wireless terminal via one of the transceivers, control is transferred to block 1105. The latter block determines the location of the wireless terminal based on the internal table that specifies the location of the transceiver being utilized by the wireless terminal. The identification of the transceiver is included in each message sent by the transceiver to central computer 208 via LAN 207. After execution of block 1105, control is transferred to block 1101.

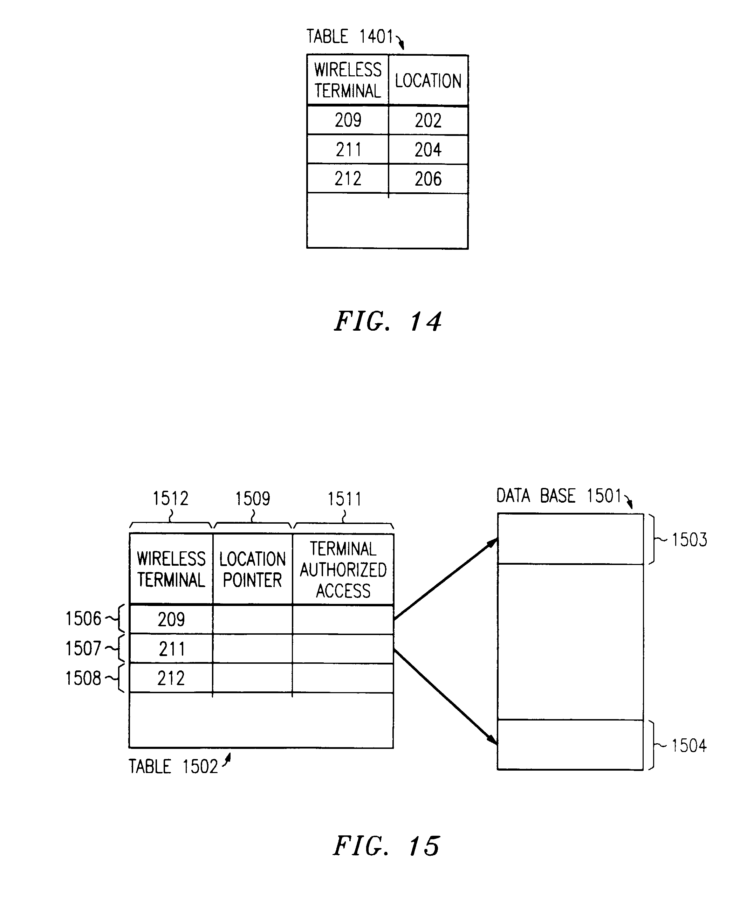

Decision block 1101 determines if the wireless terminal has changed its location. This is performed by utilizing the determined location in comparison with the location given for the terminal in Table 1401 of FIG. 14 (also referred to as Table 1 in FIG. 11). If the wireless terminal has changed locations, block 1108 updates Table 1401 to reflect this new location, and block 1109 requests the identification information from the wireless terminal by a message transmitted via central computer 208. Decision block 1111 determines when the identification information is received from the wireless terminal. When the identification information is received, control is transferred to block 1112 which determines the authorized access to the location's data that is to be given to the wireless terminal. Block 1113 stores this authorized access information into Table 1502 of FIG. 15 (also referred to as Table 2 in FIG. 11) before returning control back to decision block 1100. Returning to decision block 1101, if the wireless terminal has not changed location, control is transferred to decision block 1102 which determines if the wireless terminal is authorized to access information in database 1501 of FIG. 15 assigned to the particular location. Decision block 1102 makes this determination by determining if there is a entry for the wireless terminal in column 1512 of Table 1502 of FIG. 15. If the answer is no in decision block 1102, control is transferred to error recovery in block 1103. If the answer is yes, control is transferred to decision block 1104 which determines if the wireless terminal is requesting access to database 1501. If the answer is no, control is transferred to block 1106. The latter block performs normal processing before returning control back to decision block 1100. If the answer is yes in decision block 1104, block 1107 performs the requested access to database 1501 utilizing the pointer that comprises an entry from column 1509 and an entry from column 1511 of Table 1502 of FIG. 15 to access the appropriate portion of database 1501. After execution of block 1107, control is transferred back to decision block 1100.

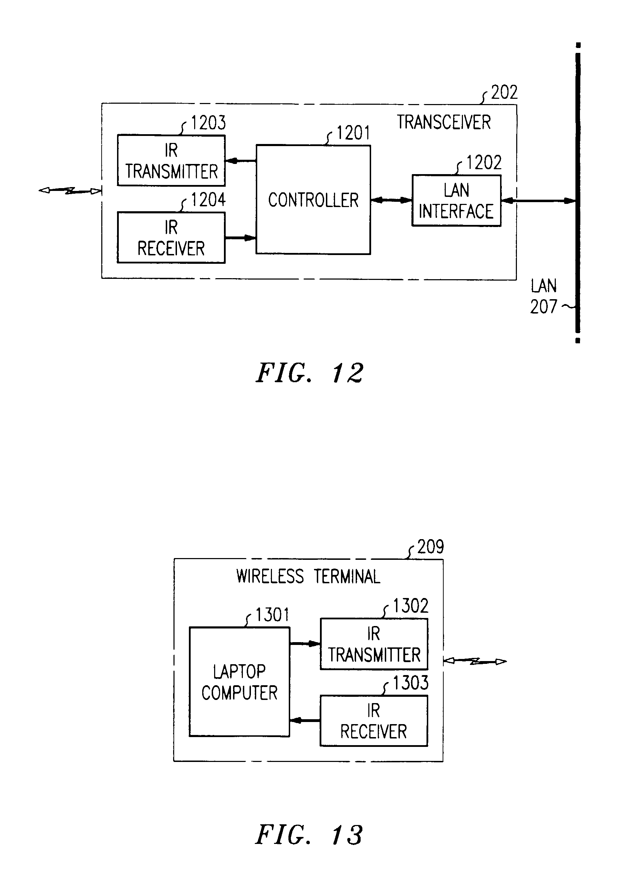

FIG. 12 illustrates, in block diagram form, transceiver 202 of FIG. 2. The other transceivers of FIG. 2 are identical in design. Controller 1201 transmits and receives messages with central computer 208 via LAN interface 1202 and LAN 207. The design of LAN interface 1202 is well known in the art and can be designed to utilize a number of different LAN protocols. Controller 1201 communicates with wireless terminals via infrared (IR) transmitter 1203 and IR receiver 1204. One skilled in the art could readily envision that the transmission medium could be other than infrared such as electromagnetic. Controller 1201 periodically transmits its identification information via IR transmitter 1203 at predefined times. When a wireless terminal receives these periodic transmissions, the wireless terminal transmits via IR receiver 1204 the identification of the wireless terminal. Controller 1201 then forms a message consisting of the identification of the wireless terminal and the identification of transceiver 202 and transmits this message via LAN interface 1202 and LAN 207 to central computer 208. Controller 1201 can be communicating with a number of wireless terminals at any given time. This allows a number of wireless terminals to be in the location covered by transceiver 202. Controller 1201 is responsive to messages received from central computer 208 via LAN interface 1202 and LAN 207 to form a message utilizing the wireless terminal identification that was included in the message from central computer 208. This formed message is then transmitted via IR transmitter 1203. The wireless terminals constantly monitor transmissions from controller 1201 and will only respond to those messages which contain the wireless terminal's identification information. This allows central computer 208 to communicate with individual wireless terminals.

FIG. 13 illustrates, in block diagram form, wireless terminal 112. The other wireless terminals illustrated in FIG. 2 would be similar in design. However, laptop computer 1301 may be replaced with a PDA. Laptop computer 1301 is responsive to the periodic polling message received from a transceiver to transmit back a message defining the identity of wireless terminal 112. Laptop computer 1301 is responsive to messages received from central computer 208 to take the appropriate actions. For example, laptop computer 130t is responsive to a message from central computer 208 requesting the identification information of laptop computer 1301 to transmit that information to central computer 208. Laptop computer 1301 also is running an application program that requests and utilizes data stored in database 1501 of FIG. 15.

## Claims

1. A method for accessing data, comprising the steps of:
assigning (FIG. 4) one of a plurality of data sets (403,404) to each of a plurality of locations;
determining (601, 608) one of the plurality of locations in which a data device (113) is located;
identifying (602) one of the plurality of data sets assigned to the determined one of the plurality of locations; and
providing (607) access to the data device to the one of the plurality of data sets.

2. The method of claim 1 wherein each of the plurality of data sets comprises subsets of data and the method further comprises the steps of requesting (611) an identification of the data device; and
limiting the access of the data device to predefined ones of the subset of data of the one of the plurality of data sets based on the identification of the data device.

3. The method of claim 1 or claim 2 wherein the data device is interconnected to a wireless switching system (111) and the step of determining comprises the step of supplying (909, 911) location information by the data device to a database computer (119) via the wireless switching system whereby the location information identifies the one of the plurality of locations.

4. The method of claim 3 wherein the step of supplying comprises the step of receiving (909) the location information from one of a plurality of fixed units by the data device whereby each of the plurality of fixed units is located in one of the plurality of locations.

5. The method of claim 1 or claim 2 wherein the data device is interconnected to a local area network (107) via a wireless connection through one of a plurality of fixed units (202) that is connected to the local area network and the step of determining comprises the step of supplying (1101) location information by the one of the plurality of fixed units to a database computer (119) via the local area network whereby the location information identifies the one of the plurality of locations.

6. The method of claim 5 wherein each of the plurality of fixed units is located in one of the plurality of locations and is connected to the local area network.

7. The method of claim 5 or 6 wherein the step of identifying the one of the plurality of data sets assigned to the determined one of the plurality of locations is performed in response to the received location information by the database computer.

8. The method of claim 7 wherein the step of providing access to the data device to the one of the plurality of data sets is performed by the database computer via the one of the plurality of fixed units and the local area network.

9. The method of any of the preceding claims wherein the data device is a computer.

10. The method of any of claims 1 to 8 wherein the data device is a PDA.

11. The method of any of claims 1 to 8 wherein the data device is a wireless telephone.

12. An apparatus for accessing data, comprising means arranged to carry out each step of a method as claimed in any of the preceding claims.
